# EUROPEAN PATENT APPLICATION

(11) **EP 4 685 528 A1**
(43) Date of publication of application: **28.01.2026**
(21) Application number: 24775084.7
(22) Date of filing: 27.02.2024
(51) Int. Cl.: G02B 5/20, C08J 7/04, C09D 7/61, C09D 7/40, C09J 7/20, B60J 1/00, B32B 7/023, B32B 7/12

(54) **OPTICAL LAMINATE, DISPLAY COMPRISING SAME, AND WINDOW FOR VEHICLE OR BUILDING**

(30) Priority: 23.03.2023 KR 20230037795
(71) Applicant: Dongwoo Fine-Chem Co., Ltd., Iksan-si, Jeollabuk-do 54631 (KR)
(72) Inventor: CHOI, Jong-Han, Iksan-si, Jeonbuk-do 54631 (KR); KIM, Jong-Hyun, Iksan-si, Jeonbuk-do 54631 (KR); PARK, Hyeong-Joo, Iksan-si, Jeonbuk-do 54631 (KR); LIM, Geo-San, Iksan-si, Jeonbuk-do 54631 (KR)
(74) Representative: Betten & Resch
(86) International application number: PCT/KR2024/002467
(87) International publication number: WO 2024/196036

(57) **Abstract**

The present invention relates to an optical laminate comprising a base layer and an absorption layer, and may provide: an optical laminate which absorbs visible light of all wavelengths evenly, thereby providing good color, prevents glare while ensuring visibility, and has excellent light resistance; a display comprising same; and a window for a vehicle or building.

## Description

### Technical Field

The present invention relates to an optical laminate and a display, an automobile or a window for a building including the same.

### Background Art

In general, there are many cases in which an external light blocking coating is applied to a glass window of a means of transportation such as a vehicle. However, the transmittance of a conventional glass window of a means of transportation is fixed, and the transmittance of the external light blocking coating is also fixed. Therefore, the overall transmittance of the conventional window of the means of transportation is fixed, which may cause an accident.

For example, when the overall transmittance is preset low, there is no problem during day when ambient light is sufficient. However, there is a problem at night when ambient light is insufficient in that it is difficult for a driver or the like to properly check the surroundings of the means of transportation. Alternatively, when the overall transmittance is preset high, there is a problem of causing glare to a driver or the like during day when ambient light is sufficient.

Furthermore, there are many cases in which an external light blocking coating is applied to glass windows for buildings to improve heating and cooling efficiency and conserve energy. In this case, if the transmittance is fixed, as in the case of a means of transportation, there is a problem of inefficiency in energy conservation.

Accordingly, development of absorbing films that control the transmittance of sunlight has been made. However, conventional absorbing films tend to have a high absorption rate of visible light in a specific wavelength range of short wavelengths or long wavelengths among visible light, and thus are not able to evenly absorb the entire wavelength range of visible light.

In addition, there is a problem in that the film is discolored and deformed by external factors such as heat and humidity due to continuous exposure to sunlight, and thus the properties of the film are difficult to maintain.

Korean Patent Application Publication No. 10-2014-0103461 discloses a film including a shielding layer that blocks visible light and near-infrared light by including an inorganic compound, but this film still has a problem in that it does not evenly absorb the entire wavelength range of visible light.

Therefore, there is a need for the development of an optical member that is capable of preventing glare by absorbing light evenly across the entire wavelength range of visible light, and at the same time, ensures visibility so as to be applicable to displays, architecture, or vehicles, and also has excellent light resistance.

### DISCLOSURE

### Technical Problem

The present invention has been made in order to solve the above-described problems occurring in the prior art, and is intended to provide an optical laminate that may absorb light evenly across the entire wavelength range of visible light, thereby displaying good color and preventing glare while ensuring visibility, and has excellent light resistance.

The present invention is also intended to provide a display, an automobile or a window for a building including the optical laminate.

### Technical Solution

In order to achieve the above objects, the present invention provides an optical laminate, including a substrate layer and an absorbing layer, and having a total transmittance (Tt) of 50 to 70%, a 10% or less difference between the transmittance at a wavelength of 450 nm and the transmittance at a wavelength of 550 nm, a 10% or less difference between the transmittance at a wavelength of 550 nm and the transmittance at a wavelength of 650 nm, and a 10% or less difference between the transmittance at a wavelength of 450 nm and the transmittance at a wavelength of 650 nm.

In the present invention, the optical laminate may have a 10% or less difference between the maximum and minimum values of transmittance in the wavelength range of 450 nm to 550 nm, a 10% or less difference between the maximum and minimum values of transmittance in the wavelength range of 550 nm to 650 nm, and a 10% or less difference between the maximum and minimum values of transmittance in the wavelength range of 450 nm to 650 nm.

In the present invention, the optical laminate may have a thickness of 20 to 100 µm.

In the present invention, the absorbing layer may be a cured product of a curable resin composition containing a binder resin, carbon nanotubes, and a solvent.

In the present invention, the carbon nanotubes may be contained in an amount of 1 to 10 parts by weight based on 100 parts by weight of the binder resin on a solid content basis.

In the present invention, the carbon nanotubes may have a diameter of 1 to 1,000 nm and an average particle size of 100 to 1,000 nm.

In the present invention, the optical laminate may further include a pressure sensitive adhesive/adhesive layer.

The present invention also provides a display, an automobile or a window for a building including the optical laminate.

### Advantageous Effects

According to the present invention, it is possible to provide an optical laminate that may absorb light evenly across the entire wavelength range of visible light, thereby displaying good color and preventing glare while ensuring visibility, and has excellent light resistance.

In addition, according to the present invention, it is possible to provide a display, an automobile or a window for a building including the optical laminate.

### Brief Description of Drawings

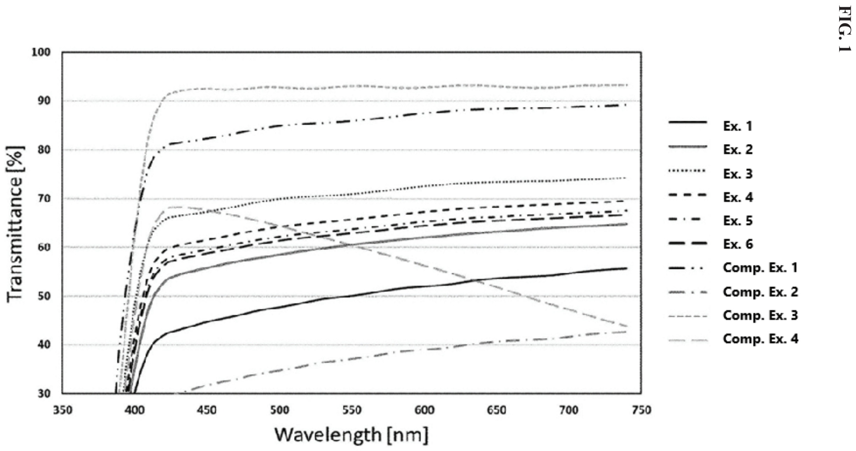

FIG. 1 is a graph showing the results of measuring the transmittance as a function of wavelength for optical laminates according to Examples and Comparative Examples of the present invention in the 25 mm transmission mode using an integrating sphere reflectance spectrophotometer (CM-3700A, Konica Minolta).

### Best Mode

The present invention provides an optical laminate, including a substrate layer and an absorbing layer, and having a total transmittance of 50 to 70%, a 10% or less difference between the transmittance at a wavelength of 450 nm and the transmittance at a wavelength of 550 nm, a 10% or less difference between the transmittance at a wavelength of 550 nm and the transmittance at a wavelength of 650 nm, and a 10% or less difference between the transmittance at a wavelength of 450 nm and the transmittance at a wavelength of 650 nm.

Hereinafter, embodiments of the present invention will be described in more detail. The terms used herein are for the purpose of describing embodiments and are not intended to limit the present invention.

### <Optical Laminate>

The present invention relates to an optical laminate including a substrate layer and an absorbing layer, wherein the optical laminate preferably has total transmittance (Tt) of 50 to 70% so as to block external light without causing a problem in visibility.

In particular, the optical laminate of the present invention is characterized in that the difference between the transmittance at a wavelength of 450 nm and the transmittance at a wavelength of 550 nm is 10% or less, the difference between the transmittance at a wavelength of 550 nm and the transmittance at a wavelength of 650 nm is 10% or less, and the difference between the transmittance at a wavelength of 450 nm and the transmittance at a wavelength of 650 nm is 10% or less. Accordingly, the optical laminate may absorb light evenly across the entire wavelength range of visible light, and thus display a unique neutral color without displaying red or blue.

Furthermore, the optical laminate of the present invention may have a 10% or less difference between the maximum and minimum values of transmittance in the wavelength range of 450 nm to 550 nm, a 10% or less difference between the maximum and minimum values of transmittance in the wavelength range of 550 nm to 650 nm, and a 10% or less difference between the maximum and minimum values of transmittance in the wavelength range of 450 nm to 650 nm. Accordingly, the optical laminate provided may absorb visible light evenly in the above wavelength ranges since the differences in transmittance in the wavelength ranges are not large.

The above-described transmittance of the present invention is measured for an optical laminate having a thickness of 20 to 100 µm, and the optical laminate of the present invention may have a thickness of 20 to 100 µm.

If the thickness of the optical laminate is less than 20µm, there may be a problem in that the optical laminate is easily torn, and if the thickness is more than 100 µm, there may be a problem in that the thickness and weight of the final product increase.

The optical laminate of the present invention satisfies the transmittance in the above-described visible light wavelength range and the differences in transmittance at specific wavelengths, and thus when applied to a display, an automobile, or a window for a building, it may prevent glare while ensuring visibility and blocking external light.

### Substrate Layer

As the substrate layer of the present invention, a film that is excellent in terms of transparency, mechanical strength, thermal stability, moisture barrier properties, isotropy, etc. may be used. Specific examples of the film include films composed of thermoplastic resins such as polyester-based resins such as polyethylene terephthalate, polyethylene isophthalate, polyethylene naphthalate, and polybutylene terephthalate; cellulose-based resins such as diacetyl cellulose and triacetyl cellulose; polycarbonate-based resins; acrylate-based resins such as polymethyl (meth)acrylate and polyethyl (meth)acrylate; styrene-based resins such as polystyrene and acrylonitrile-styrene copolymers; polyolefin-based resins such as polyethylene, polypropylene, polyolefins having a cyclo or norbornene structure, and ethylene-propylene copolymers; vinyl chloride-based resins; allylate-based resins; polyoxymethylene-based resins; and epoxy-based resins. A film composed of a blend of the above thermoplastic resins may also be used. In addition, a film composed of a thermosetting resin or a UV-curable resin, such as (meth)acrylate-, urethane-, acrylic urethane-based, epoxy-based, or silicone-based resin, may be used.

In one embodiment, the substrate layer may have a thickness of 15 µm to 95 µm. If the thickness of the substrate layer is less than 15 µm, a problem may arise in that the substrate layer is not able to properly support the absorbing layer laminated thereon, and if the thickness is more than 95 µm, a problem may arise in that, since the excessive thickness leads to an increase in the thickness of the entire laminate, the transmittance or flexibility of the optical laminate is reduced.

### Absorbing Layer

The absorbing layer of the present invention is a layer formed on one or both surfaces of the substrate layer and capable of functioning to satisfy the above-described transmittance, and may be formed by curing a curable resin composition for forming the absorbing layer. The curable resin composition for forming the absorbing layer may be, for example, a curable resin composition containing a binder resin, carbon nanotubes, and a solvent, which will be described later, wherein the curable resin composition may further contain an additive, if necessary.

The binder resin may include a thermosetting binder resin or a photocurable binder resin.

As the thermosetting binder resin, a water-soluble binder or a solvent-type binder resin may be used. Such binder resin may be, for example, one or a mixture of two or more selected from the group consisting of acrylic resins, urethane-based resins, urethane-acrylic resins, ester-based resins, ether-based resins, epoxy-based resins, polyimides, polyamides, polyether-based resins, polyolefin-based resins, and melamine-based resins, without being limited thereto.

The photocurable binder resin may include a photocurable (meth)acrylate oligomer and monomer.

As the photocurable (meth)acrylate oligomer, epoxy (meth)acrylate, urethane (meth)acrylate or the like is typically used, and urethane (meth)acrylate is more preferred.

The urethane (meth)acrylate may be produced by reacting a multifunctional (meth)acrylate having a hydroxyl group in the molecule and a compound having an isocyanate group in the presence of a catalyst. As a specific example, the (meth)acrylate having a hydroxyl group in the molecule may be at least one selected from the group consisting of 2-hydroxyethyl (meth)acrylate, 2-hydroxyisopropyl (meth)acrylate, 4-hydroxybutyl (meth)acrylate, caprolactone ring-opened hydroxyacrylate, a pentaerythritol tri/tetra (meth)acrylate mixture, and a dipentaerythritol penta/hexa (meth)acrylate mixture. In addition, as a specific example, the compound having an isocyanate group may be at least one selected from the group consisting of 1,4-diisocyanatobutane, 1,6-diisocyanatohexane, 1,8-diisocyanatooctane, 1,12-diisocyanatododecane, 1,5-diisocyanato-2-methylpentane, trimethyl-1,6-diisocyanatohexane, 1,3-bis(isocyanatomethyl)cyclohexane, trans-1,4-cyclohexane diisocyanate, 4,4'-methylenebis(cyclohexyl isocyanate), isophorone diisocyanate, toluene-2,4-diisocyanate, toluene-2,6-diisocyanate, xylene-1,4-diisocyanate, tetramethylxylene-1,3-diisocyanate, 1-chloromethyl-2,4-diisocyanate, 4,4'-methylenebis(2,6-dimethylphenyl isocyanate), 4,4'-oxybis(phenyl isocyanate), trifunctional isocyanates derived from hexamethylene diisocyanate, and a trimethylolpropanol adduct of toluene diisocyanate.

The monomer is a commonly used one having, as a photocurable functional group, an unsaturated group such as a (meth)acryloyl group, a vinyl group, a styryl group, or an allyl group, in the molecule, and among these groups, a (meth)acryloyl group is more preferable.

As a specific example, the monomer having a (meth)acryloyl group may be at least one selected from the group consisting of neopentyl glycol acrylate, 1,6-hexanediol (meth)acrylate, propylene glycol di(meth)acrylate, triethylene glycol di(meth)acrylate, dipropylene glycol di(meth)acrylate, polyethylene glycol di(meth)acrylate, polypropylene glycol di(meth)acrylate, trimethylolpropane tri(meth)acrylate, trimethylolethane tri(meth)acrylate, 1,2,4-cyclohexane tetra(meth)acrylate, pentaglycerol tri(meth)acrylate, pentaerythritol tetra(meth)acrylate, pentaerythritol tri(meth)acrylate, dipentaerythritol tri(meth)acrylate, dipentaerythritol penta(meth)acrylate, dipentaerythritol tetra(meth)acrylate, dipentaerythritol hexa(meth)acrylate, tripentaerythritol tri(meth)acrylate, tripentaerythritol hexatri(meth)acrylate, bis(2-hydroxyethyl)isocyanurate di(meth)acrylate, hydroxyethyl(meth)acrylate, hydroxypropyl(meth)acrylate, hydroxybutyl (meth)acrylate, isooctyl (meth)acrylate, isodecyl (meth)acrylate, stearyl (meth)acrylate, tetrahydrofurfuryl (meth)acrylate, phenoxyethyl (meth)acrylate, and isoborneol (meth)acrylate.

The photocurable (meth)acrylate oligomers and monomers exemplified above may be used alone or in combination of two or more.

The content of the binder resin is not particularly limited, but may be 1 to 80 wt%, preferably 1 to 50 wt%, based on the total weight of the curable resin composition for forming the absorbing layer. If the content is less than 1 wt%, there may be a problem in that the adhesion between the substrate and the coating layer decreases, and if the content is more than 80 wt%, a problem may arise in that the viscosity of the composition increases, resulting in a decrease in coatability.

The curable resin composition for forming the absorbing layer of the present invention may contain carbon nanotubes.

The carbon nanotubes may have a tube shape formed by rolling up graphite sheets made up of hexagonal rings of six carbon atoms connected to each other.

The carbon nanotubes have excellent mechanical properties, and thus when applied to an optical laminate, the hardness of the optical laminate may be increased. In addition, since the carbon nanotubes do not decompose when exposed to UV light or heat, etc., the weather resistance and light resistance of the optical laminate may be increased.

The method for producing the carbon nanotubes is not particularly limited, and the carbon nanotubes may be produced by methods known in the art, such as a chemical vapor deposition method, an arc discharge method, a plasma torch method, and an ion bombardment method. In one example, the carbon nanotubes may be produced by an arc discharge method.

The specific structure of the carbon nanotube is not particularly limited, and the carbon nanotube may be, for example, any one of a single-walled carbon nanotube (SWCNT) or a multi-walled carbon nanotube (MWCNT), with the multi-walled carbon nanotube (MWCNT) being more preferred.

According to one embodiment of the present invention, the carbon nanotube may have a diameter of 1 to 1,000 nm, preferably 10 to 500 nm.

If the diameter of the carbon nanotube is less than 1 nm, there may be a problem in terms of absorption efficiency, and if the diameter is more than 1,000 nm, there is a problem in that the transmittance of the optical laminate decreases.

Furthermore, the carbon nanotubes may have an average particle size of 100 to 1,000 nm. Since it is difficult to measure a straight line due to the nature of carbon nanotubes, the average particle size may be measured using a particle sizer in the same manner as dispersed particles by reflecting the free twisting state in a liquid phase.

If the average particle size of the carbon nanotubes is less than 100 nm, it will be difficult to achieve the above-described transmittance of the optical laminate of the present invention, and if the average particle size of the carbon nanotubes is more than 1,000 nm, haze may increase due to scattering, or the coating properties may be significantly reduced because the carbon nanotubes cannot pass through the filter.

The carbon nanotubes may be contained in an amount of 1 to 10 parts by weight based on 100 parts by weight of the binder resin on a solid content basis. If the carbon nanotubes are contained in an amount of less than 1 part by weight based on 100 parts by weight of the binder resin on a solid content basis, there may be a problem in terms of absorption efficiency, and if the content of the carbon nanotubes is more than 10 parts by weight, there may be a problem in that the transmittance is reduced.

The curable resin composition for forming the absorbing layer of the present invention may contain a solvent. The solvent is a solvent capable of dissolving or dispersing the components contained in the above-described curable resin composition for forming the absorbing layer, and any solvent may be used without limitation as long as it is known in the art as a solvent for a composition for forming a coating layer.

Preferred examples of usable solvents include alcohol-based solvents such as methanol, ethanol, isopropanol, butanol, methyl cellosolve, and ethyl cellosolve; ketone-based solvents such as methyl ethyl ketone, methyl butyl ketone, methyl isobutyl ketone, diethyl ketone, dipropyl ketone, and cyclohexanone; acetate-based solvents such as ethyl acetate, propyl acetate, normal butyl acetate, tert-butyl acetate, methyl cellosolve acetate, ethyl cellosolve acetate, propylene glycol monomethyl ether acetate, propylene glycol monoethyl ether acetate, propylene glycol monopropyl ether acetate, methoxybutyl acetate, and methoxypentyl acetate; hexane-based solvents such as hexane, heptane, and octane; benzene-based solvents such as benzene, toluene, and xylene; and ether-based solvents such as diethylene glycol dimethyl ether, diethylene glycol diethyl ether, diethylene glycol dipropyl ether, diethylene glycol dibutyl ether, and propylene glycol monomethyl ether. The solvents exemplified above may be used alone or in combination of two or more.

For example, when the binder resin is polyimide resin, good solvents therefor include acetone, methyl ethyl ketone, cyclopentanone, ethyl acetate, etc., and poor solvents therefor include alcohols such as isopropyl alcohol, butanol, and ethanol, and ethers such as butyl acetate, and propylene glycol methyl ether.

Preferably, as the solvent, a good solvent is used alone or a mixture of a good solvent and a poor solvent is used. The good solvent and the poor solvent may be appropriately selected depending on the material of the binder resin.

Such solvent may be used in an amount of 10 to 95 wt% based on the total weight of the curable resin composition for forming the absorbing layer. If the content of the solvent is lower than the lower limit of the above content range, viscosity may increase, resulting in poor workability, and carbon nanotube dispersion may not be sufficient. In addition, if the content of the solvent is higher than the upper limit of the above range, the drying process may take a long time, resulting in poor economic efficiency, and haze may occur.

The curable resin composition for forming the absorbing layer of the present invention may, if necessary, further contain an additive such as a leveling agent that provides smoothness and coatability to the coating layer.

Examples of the leveling agent include a silicone-based leveling agent, a fluorine-based leveling agent, an acrylic polymer-based leveling agent, etc., and these leveling agents may be used alone or in combination of two or more. The leveling agent may be contained in an amount of, for example, 0.1 to 1 wt% based on the total weight of the curable resin composition for forming the absorbing layer, without being limited thereto.

The curable resin composition for forming the absorbing layer of the present invention may further contain, in addition to the leveling agent, other additives such as a UV stabilizer and a thermal stabilizer.

In one embodiment of the present invention, the absorbing layer may have a thickness of 0.5 to 5 µm. When the thickness of the absorbing layer satisfies the above range, it is preferable because the transmittance at each wavelength targeted by the present invention may be appropriately satisfied. More specifically, if the thickness of the absorbing layer is less than 0.5 µm, the absorption efficiency fluctuates greatly even with a slight thickness variation, making it difficult to obtain a uniform transmittance, and if the thickness is more than 5 µm, economical efficiency is reduced.

### <Display, Automobile, or Window for Building>

The present invention includes a display including the optical laminate.

The display is not limited thereto as long as it includes the optical laminate, and may include a smart window.

The display may include a configuration commonly known in the art, except that it includes the optical laminate described above.

In addition, the present invention includes a means of transportation including the optical laminate, for example, an automobile in which the smart window is applied to at least one of a front window, a rear window, a side window, a sunroof window, and an interior partition. The present invention also includes a wearable device and a window for a building including the optical laminate.

### Mode for Invention

Hereinafter, the present invention will be described in more detail through examples. However, the following examples are intended to explain the present invention in more detail, and the scope of the present invention is not limited by the following examples.

### Preparation Examples 1 to 10: Preparation of Curable Resin Compositions for Forming Absorbing Layer

Curable resin compositions for forming an absorbing layer were prepared with the compositions shown in Table 1 below.

**[Table 1]**

| (wt%) | Carbon nanotube dispersion | Polythiophe ne dispersion | Binder resin composition | Leveling agent | Solvent | Carbon nanotube solid content (parts by weight) based on 100 parts by weight of binder resin solid content | Absorbing layer thickness (µm) |
|---|---|---|---|---|---|---|---|
| Preparation Example 1 | 20.5 | - | 34.4 | 0.1 | 45 | 4.1 | 1.5 |
| Preparation Example 2 | 18.7 | - | 31.2 | 0.1 | 50 | 4.2 | 1.2 |
| Preparation Example 3 | 16.1 | - | 28.8 | 0.1 | 55 | 3.9 | 0.9 |
| Preparation Example 4 | 20.5 | - | 29.4 | 0.1 | 50 | 4.8 | 0.7 |
| Preparation Example 5 | 20.5 | - | 60.0 | 0.1 | 19.4 | 2.4 | 2.0 |
| Preparation Example 6 | 20.5 | - | 18.0 | 0.1 | 61.4 | 7.9 | 0.6 |
| Preparation Example 7 | 5.0 | - | 50.0 | 0.1 | 44.9 | 0.7 | 1.2 |
| Preparation Example 8 | 22.0 | - | 15.0 | 0.1 | 62.9 | 10.2 | 1.2 |
| Preparation Example 9 | - | - | 32.4 | 0.1 | 67.5 | 0 | 1.2 |
| Preparation Example 10 | - | 5.09 | 32.4 | 0.1 | 62.41 | 0 | 1.2 |

- Carbon nanotube dispersion: TCI-07 (solid content: 1.5%, carbon nanotube diameter: < 10 nm, average particle size: 300 nm, Nano Chem Tech, Inc.)
- Polythiophene dispersion: SEPLEGYDA SAS-PE-H02A (solid content: 5.5%, Shin-Etsu Polymer Co., Ltd.)

Binder resin composition: DW-10F (solid content: 21.6%, urethane-based, Nano Chem Tech, Inc.)
- Leveling agent: BYK-UV3530 (solid content: 100%, BYK Co., Ltd.)
- Solvent: isopropyl alcohol

### Examples 1 to 6 and Comparative Examples 1 to 4: Manufacturing of Optical Laminates

The curable resin composition for forming an absorbing layer, prepared in each of Preparation Examples 1 to 10, were applied to a triacetyl cellulose (25 µm TAC, Hyosung Corporation) substrate layer so that the thickness after curing was as shown in Table 1. The applied resin composition was heat-cured at 80°C for 3 minutes, thereby manufacturing optical laminates of Examples and Comparative Examples. The properties of the manufactured optical laminates were measured as follows, and the results are shown in Table 2 below.

### Test Example

### (1) Transmittance

For the optical laminates of the Examples and the Comparative Examples, the total transmittance (Tt) was measured using a haze meter HM-150N (Murakami Co., Ltd.), and the results are shown in Table 2 below. In addition, the transmittances at 450 nm, 550 nm, and 650 nm were measured in the 25 mm transmission mode using an integrating sphere reflectance spectrophotometer (CM-3700A, Konica Minolta), and the results are shown in FIG. 1. The difference in the transmittances at the wavelengths was calculated, and the results are shown in Table 2 below.

### (2) Color

For the optical laminates of the Examples and the Comparative Examples, the transmittances at 450 nm, 550 nm, and 650 nm were measured in the 25 mm transmission mode using an integrating sphere reflectance spectrophotometer (CM-3700A, Konica Minolta), and the color was evaluated according to the evaluation criteria below. The results are shown in Table 2 below.

### <Evaluation criteria>

∘: All of the following conditions are satisfied (neutral color)
x: None of the following conditions are satisfied
| transmittance at 550 nm-450 nm | ≤10%
| transmittance at 650 nm-550 nm | ≤10%
| transmittance at 650 nm-450 nm | ≤10%

### (3) Evaluation of Light Resistance

For the optical laminates of the Examples and the Comparative Examples, the initial transmittance was measured using the UV-2600 (Shimadzu Corporation) instrument, and then the transmittance change and the film appearance change were checked after 120 hours of placement in the UV AUTO Fademeter (Model: U48AU, Suga Corporation) and evaluated according to the evaluation criteria below, and the results are shown in Table 2 below.

### <Evaluation criteria>

∘: There are no changes in transmittance and appearance.
x: There are changes in transmittance and appearance.

### (4) Glare

For the optical laminates of the Examples and the Comparative Examples, the total transmittance (Tt) was measured using a haze meter HM-150N (Murakami Co., Ltd.), and the degree of glare was evaluated according to the evaluation criteria below. The results are shown in Table 2 below.

### <Evaluation criteria>

∘: Total transmittance (Tt) is 70% or less
x: Total transmittance (Tt) is more than 70%

### (5) Visibility

For the optical laminates of the Examples and the Comparative Examples, the total transmittance (Tt) was measured using a haze meter HM-150N (Murakami Co., Ltd.), and the degree of visibility was evaluated according to the evaluation criteria below. The results are shown in Table 2 below.

### <Evaluation criteria>

∘: Total transmittance (Tt) is 50% or more
x: Total transmittance (Tt) is less than 50%

### (6) Haze

For the optical laminates of the Examples and the Comparative Examples, haze was measured using a haze meter HM-150N (Murakami Co., Ltd.), and the results are shown in Table 2 below.

### (7) Adhesion

After the absorbing layer faced upward and the substrate layer was bonded to glass using a transparent adhesive, scratches were made on the absorbing layer in the shape of 100 squares, each having a size of 1 mm x 1 mm, using a cutter knife, and an adhesion test was performed three times using a **Nichiban** tape. The results of the adhesion test according to the evaluation criteria below are shown in Table 2 below.

### <Evaluation criteria>

0B: Delamination of 65% or more
1B: Delamination of 35% to less than 65%
2B: Delamination of 15% to less than 35%
3B: Delamination of 5% to less than 15%
4B: Delamination of less than 5%
5B: No delamination

**[Table 2]**

| | Example 1 | Example 2 | Example 3 | Example 4 | Example 5 | Example 6 | Comp. Example 1 | Comp. Exampl e 2 | Comp. Example 3 | Comp. Example 4 |
|---|---|---|---|---|---|---|---|---|---|---|
| Absorbing layer | Prep. Example 1 | Prep. Example 2 | Prep. Example 3 | Prep. Example 4 | Prep. Example 5 | Prep. Example 6 | Prep. Example 7 | Prep. Exampl e 8 | Prep. Example 9 | Prep. Example 10 |
| Tt (%) | 50.2 | 60.3 | 69.9 | 65.3 | 63.2 | 62.5 | 85.6 | 36.9 | 92.4 | 60.4 |
| \| transmittance at 550 nm-450 nm \| [%] | 5.35 | 4.77 | 3.63 | 4.20 | 4.19 | 4.10 | 3.63 | 5.35 | 0.54 | 7.13 |
| \| transmittance at 650 nm-550 nm \| [%] | 3.56 | 2.66 | 2.48 | 2.57 | 2.47 | 2.59 | 2.48 | 3.56 | 0.05 | 8.61 |
| \| transmittance at 650 nm-450 nm \| [%] | 8.91 | 7.43 | 6.11 | 6.77 | 6.66 | 6.68 | 6.11 | 8.91 | 0.49 | 15.74 |
| Color | ○ | ○ | ○ | ○ | ○ | ○ | ○ | ○ | ○ | X |
| Light resistance | ○ | ○ | ○ | ○ | ○ | ○ | ○ | ○ | X | X |
| Glare | ○ | ○ | ○ | ○ | ○ | ○ | X | ○ | X | ○ |
| Visibility | ○ | ○ | ○ | ○ | ○ | ○ | ○ | X | ○ | ○ |
| Haze (%) | 0.7 | 0.8 | 0.7 | 0.7 | 0.6 | 0.8 | 0.5 | 0.8 | 0.3 | 0.7 |
| Adhesion | 5B | 5B | 5B | 5B | 5B | 5B | 5B | 5B | 5B | 5B |

Referring to the results in Table 2 above, it can be confirmed that the optical laminates according to the Examples of the present invention, in which the total transmittance (Tt) satisfies 50 to 70%, the difference between the transmittance at a wavelength of 450 nm and the transmittance at a wavelength of 550 nm is 10% or less, the difference between the transmittance at a wavelength of 550 nm and the transmittance at a wavelength of 650 nm is 10% or less, and the difference between the transmittance at a wavelength of 450 nm and the transmittance at a wavelength of 650 nm is 10% or less, are excellent in terms all of color, light resistance, visibility, and glare.

In addition, referring to the results in FIG. 1, it can be confirmed that the optical laminates according to the Examples of the present invention satisfied a 10% or less difference between the maximum and minimum values of transmittance in the wavelength range of 450 nm to 550 nm, a 10% or less difference between the maximum and minimum values of transmittance in the wavelength range of 550 nm to 650 nm, and a 10% or less difference between the maximum and minimum values of transmittance in the wavelength range of 450 nm to 650 nm, and could evenly absorb visible light in the above wavelength ranges, thereby displaying good color and preventing glare while ensuring visibility.

### Industrial Applicability

The present invention may provide an optical laminate that that may absorb light evenly across the entire wavelength range of visible light, thereby displaying good color and preventing glare while ensuring visibility, and has excellent light resistance.

## Claims

1. An optical laminate, comprising a substrate layer and an absorbing layer, and having a total transmittance (Tt) of 50 to 70%, a 10% or less difference between a transmittance at a wavelength of 450 nm and a transmittance at a wavelength of 550 nm, a 10% or less difference between a transmittance at a wavelength of 550 nm and a transmittance at a wavelength of 650 nm, and a 10% or less difference between a transmittance at a wavelength of 450 nm and a transmittance at a wavelength of 650 nm.

2. The optical laminate of claim 1, wherein the optical laminate has a 10% or less difference between maximum and minimum values of transmittance in a wavelength range of 450 nm to 550 nm, a 10% or less difference between maximum and minimum values of transmittance in a wavelength range of 550 nm to 650 nm, and a 10% or less difference between maximum and minimum values of transmittance in a wavelength range of 450 nm to 650 nm.

3. The optical laminate of claim 1, wherein the optical laminate has a thickness of 20 µm to 100 µm.

4. The optical laminate of claim 1, wherein the absorbing layer is a cured product of a curable resin composition containing a binder resin, carbon nanotubes, and a solvent.

5. The optical laminate of claim 4, wherein the carbon nanotubes are contained in an amount of 1 to 10 parts by weight based on 100 parts by weight of the binder resin on a solid content basis.

6. The optical laminate of claim 4, wherein the carbon nanotubes have a diameter of 1 nm to 1,000 nm and an average particle size of 100 nm to 1,000 nm.

7. The optical laminate of claim 1, further comprising a pressure sensitive adhesive/adhesive layer.

8. A display comprising the optical laminate of any one of claims 1 to 7.

9. An automobile comprising the optical laminate of any one of claims 1 to 7 in at least one of a front window, a rear window, a side window, a sunroof window, and an interior partition.

10. A window for a building comprising the optical laminate of any one of claims 1 to 7.
